# EUROPEAN PATENT SPECIFICATION

(11) **EP 4 283 828 B1**
(45) Date of publication and mention of the grant of the patent: **12.02.2025**
(21) Application number: 23153740.8
(22) Date of filing: 27.01.2023
(51) Int. Cl.: H02J 13/00, H01H 83/02, H02H 3/02

(54) **METHODS AND SYSTEMS FOR SAFELY TRANSFERRING ELECTRICAL POWER**
VERFAHREN UND SYSTEME ZUR SICHEREN ÜBERTRAGUNG VON STROM
PROCÉDÉS ET SYSTÈMES DE TRANSFERT SÉCURISÉ D'ÉNERGIE ÉLECTRIQUE

(43) Date of publication of application: 29.11.2023
(73) Proprietor: Applied Micro Electronics B.V., 5633 AA Eindhoven (NL)
(72) Inventor: JANSSENS, Luuk, 5633 AA Eindhoven (NL); VOOGT, Ewout Arjen, 5633 AA Eindhoven (NL)
(74) Representative: V.O.

(56) References cited:
- WO-A1-2014/197942
- WO-A2-2009/040554
- GB-A- 2 566 059
- US-A1- 2012 140 371

## Description

### TECHNICAL FIELD AND BACKGROUND

The present disclosure relates to systems for transferring electrical power, and methods and devices for maintaining safety and system integrity during such transfer.

Transfer of electrical power may include supplying electrical power from an electrical grid to an electrical system, supplying electrical power from the electrical system to the electrical grid to an electrical system, or both. For example, electrical systems may include various types of electrical loads taking power from the grid, electrical generators such as solar inverters supplying power to the grid, and bi-directional chargers used for charging/discharging batteries. Protection devices are typically used to allow a separation between the electrical system and the electrical grid. For example, a residual-current circuit breaker (RCCB) is a device that monitors the flow of electrical current in a circuit, and automatically disconnects the power if it detects an imbalance. This imbalance can indicate a potentially dangerous situation, such as an electrical shock hazard or a ground fault. Typical safety and grid standards may require multiple protection mechanism so that the failure of one mechanism does lead to dangerous situations or bring down parts of the electrical grid. So, to connect a local electrical system to the grid it may be required to use protection devices having multiple contactors or relays with appropriate monitoring and control devices. Unfortunately, the resulting system may be overly complex and bulky, since effectively multiple protection devices are applied, which need to be integrated in the local electrical system. Some grid standards may allow separation of local and remote protection devices, in which case it may be required that a signal is sent from the local protection device to the remote protection device to enforce a power disconnect e.g. using a central switch. However, since the distance between the local electrical system and the central switch can be large, signaling is not trivial.

Known protection devices are described in WO2014/197942, WO2009/040554, US2012/140371 and GB2566059.

There is a need to reduce the complexity and size of protection devices for local electrical systems while maintaining or improving standards for safety and grid integrity.

### SUMMARY

The scope of this patent is defined by the independent claims. Aspects of the present disclosure relate to methods and systems for transferring, via a local interface, electrical power between a central interface and a local electrical system. Typically, the transferring of electrical power comprises sending electrical current back and forth via local power lines between the local interface and the central interface. The central interface is electrically connected to transfer the electrical power to and/or from an electrical grid via a central interface switch. For example, the local interface comprises a local charging station, e.g. to charge (or discharge) a battery, and the central interface comprises a central distribution point for distributing power from (or to) a main electrical grid. The central interface switch typically comprises a residual-current circuit breaker for severing the electrical connection to the electrical grid when an imbalance occurs in the electrical current being sent back and forth via the local power lines. This may help to protect integrity of the grid and/or safety of local systems.

As described herein a controller of the local interface, e.g. forming part of a charging station, monitors a status of the local electrical system, e.g. comprising a battery being charged/discharged by the system. Responsive to detecting a fault condition in the monitored status of the local electrical system, the controller can activate a leakage circuit of the local interface to generate a current imbalance on the local power lines. This may cause the central interface to sever the local electrical system from the electrical grid by triggering of the residual-current circuit breaker of the central switch. Advantageously, a leakage current can be easily and controllably generated in the case of a fault condition on the existing local power lines to activate the central switch, which may be situated remotely, without requiring further signal lines. Using the leakage current as a signal can take advantage of existing circuit breakers which are typically placed at central interfaces to protect the electrical grid. Also, the leakage current signal can reach relatively large distances without having to fear signal degradation. The remotely activated switch can act as alternative or additional means of protection, e.g. in addition to a local switch. So, the number of required switches, e.g. expensive relays, in the local interface can be reduced while maintaining the same protection using a simple leakage current circuit.

In some embodiments, the monitoring of the status of the local electrical system comprises monitoring the local power lines. In one embodiment, the monitoring comprises performing a measurement of a voltage, current, power, frequency, phase, and/or noise transferred via the local power lines to and/or from the local electrical system. In another or further embodiment, the detecting the fault condition comprises determining that the measurement deviates from a threshold tolerance value. Advantageously, the status of the local electrical system can thus be monitored using the power lines running though the local interface to the local electrical system, without requiring separate signals to be sent to and/or from the local electrical system. In other or further embodiments, the monitoring of the status of the local electrical system comprises receiving a status signal from the local electrical system. In one embodiment, the detecting the fault condition is based on the status signal indicating a fault condition in the local electrical system (or an absence of the status signal indicating a fault condition in the local electrical system).

In accordance with the claimed invention, the local interface comprises a local interface switch configured to selectively disconnect the local electrical system from the local power lines. Responsive to detecting the fault condition in the monitored status of the local electrical system, as a primary means of protection, the controller initially sends a control signal to the local interface switch causing the local interface to sever the local electrical system from the electrical grid. As a secondary means of protection, the controller, subsequently and only responsive to determining that the local interface switch is not operable to disconnect the electrical power, activates the leakage circuit to generate the current imbalance on the local power lines causing the central interface to sever the local electrical system from the electrical grid. In other or further embodiments, the local interface is operable for reconnecting the local electrical system based on the monitored status indication that the fault condition has been removed and/or a control signal indicating that the transferring of electrical power is to be resumed. For example, the local interface may comprise a user interface for manually resuming transfer of electrical power after a fault condition has been alleviated.

In some embodiments, the local interface comprises a bi-directional charging station. In other or further embodiments, electrical power is transferred over the local power lines by alternating current, AC. In one embodiment, the leakage circuit of the local interface is configured to generate an AC residual current on the local power lines. Preferably, the local interface comprises a (backup) power source, such as a battery, configured to supply electrical power for operating components of the local interface, such as the controller and leakage circuit. In this way operation of the local interface can be ensured independent of any fault conditions occurring in the electrical power transferred via the local power lines. Alternatively, or in addition, the local interface and/or battery may receive power from the power lines, e.g. via a power converter. Preferably, the power converter has relatively high tolerance for various fault conditions which may occur on the local power lines.

In some embodiments, the controller is configured, upon initiating of the local interface, to test whether the central interface switch is operable to disconnect the electrical power by activating the leakage circuit. In other or further embodiments, the controller is configured to allow the transferring of electrical power via the local interface only after determining the central interface switch is operable to disconnect the electrical power by the activating of the leakage circuit.

Some aspects of the present disclosure can be embodied as a local interface configured to transfer electrical power between an electrical grid and a local electrical system, e.g. in accordance with the methods and systems described herein. In some embodiments, the local interface comprises electrical connections, e.g. respective terminals, configured to connect to the local electrical system and connect to local power lines for the transferring of electrical power via the local interface between the local electrical system and a central interface to the electrical grid. Typically, the transferring of electrical power comprises sending electrical current back and forth via the local power lines between the local interface and the central interface. In other or further embodiments, the local interface comprises a leakage circuit which, when activated, is configured to generate a current imbalance on the local power lines for triggering a residual-current circuit breaker at the central interface. In other or further embodiments, the local interface comprises a controller configured to monitor a status of the local electrical system, and responsive to detecting a fault condition in the monitored status of the local electrical system, activating the leakage circuit for severing the local electrical system from the electrical grid. For example, the leakage circuit may be configured to generate a residual current larger than 6 mA DC and/or 30 mA AC.

In some embodiments, the local interface comprises a protective earth terminal for providing a ground connection. In one embodiment, the leakage circuit comprises a switchable electrical connection between at least one of the local power lines and the protective earth terminal. In another or further embodiment, the switchable electrical connection is switchable between a first position, in which an electrical connection between the at least one of the local power lines and the protective earth terminal is interrupted, and a second position, in which the electrical connection is closed. For example, the controller is configured arranged for controlling the switchable connection between the first and second position based on detecting the fault condition.

In some embodiments, the leakage circuit and/or the switchable connection comprises one or more active switching elements. In one embodiment, the active switching elements comprises a unipolar current switching circuit for generating a DC residual current. In another or further embodiment, the active switching elements comprises a bipolar current switching circuit for generating an AC residual current. In another or further embodiment, the active switching elements comprises a solid state relay switching circuit for generating both AC and DC residual currents. In another or further embodiment, the active switching elements comprises a relay switching circuit for generating both AC and DC residual current in case of high electrical insulation and infrequent activation of the leakage circuit. Also combinations of different types of active switching elements can be used.

Some aspects of the present disclosure can be embodied as a system comprising the local interface connected to the central interface via the local power lines. In some embodiments, the central interface is electrically connected to transfer the electrical power to and/or from the electrical grid via a central interface switch. In other or further embodiments, the central interface switch comprises the residual-current circuit breaker for severing the electrical connection to the electrical grid when an imbalance occurs in the electrical current being sent back and forth via the local power lines.

### BRIEF DESCRIPTION OF DRAWINGS

These and other features, aspects, and advantages of the apparatus, systems and methods of the present disclosure will become better understood from the following description, appended claims, and accompanying drawing wherein:
FIG 1 illustrates transferring, via a local interface, electrical power between a central interface and a local electrical system;
FIGs 2A-D illustrate local interfaces.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

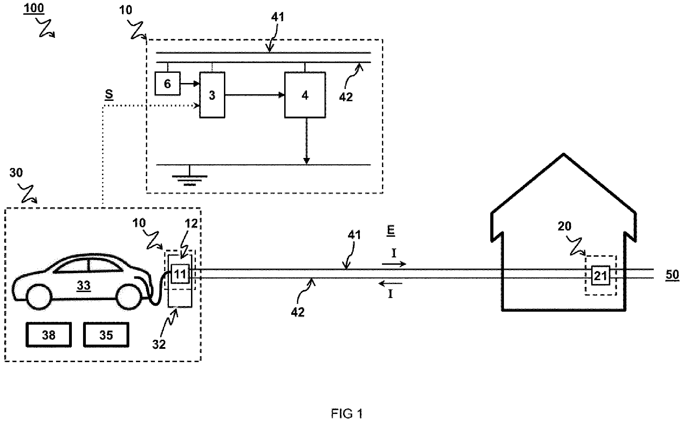

FIG 1 illustrates a method and corresponding local interface 10 for triggering a central interface switch 21, e.g. suitable for network and system protection using a standard grid compliant installation. The method and local interface 10 described herein can e.g. be applied in AC or DC charging products, intended for private and public use. Also, the method and local interface 10 can be applied in AC or DC power generators, such as solar inverters, battery walls, and wind turbines. Preferably, the local interface 10 is integrated in, or otherwise forms part of, a local power station 32 configured to received and/or supply power to the local electrical system 30, e.g. charging station configured to charge and/or discharge a battery.

In some embodiments, the local electrical system 30 is arranged for receiving electrical power E from the central interface 20, for generating and supplying electrical power E to the central interface 20, or for both receiving and generating electrical power E. In other or further embodiments, the local electrical system 30 comprises a power load, such as an electrical charging device 32 or other power consuming device, arranged for receiving electrical power E from the central interface 20, e.g. for charging a plug-in hybrid or full electric vehicle 33. In other or further embodiments, the local electrical system 30 comprises a power source 35 or generator, such as a photovoltaic system, arranged for generating and supplying electrical power E to the central interface 20. In other or further embodiments, the local electrical system 30 comprises a chargeable battery unit 38, and the local interface 10 is be arranged for both charging the chargeable battery unit using electrical power from the central interface 20, as well as discharging the chargeable battery unit to the central interface 20, e.g. to provide auxiliary electrical power to the central interface 20.

The central interface 20 may e.g. be part of a central power distribution, and/or be accessible from any residential, industrial, or commercial structure or facility, such as a home or office building, factory or distribution site, charging station, parking area, or electrical power junction. In one example, the central interface 20 may be accessible from a building on a real estate parcel, and the local electrical system 30 may be an electric charging device provided on the real estate parcel nearby the building and arranged for charging an electric vehicle, e.g. at a distance up to fifty meter from the building, or more.

In accordance with the invention as claimed, electrical power E is transferred, via the local interface 10, between a central interface 20 and a local electrical system 30. The central interface 20 is connected to a main grid 50. The electrical power E is transferred between the central interface 20 and the main grid 50 via a central interface switch 21 comprising a residual-current circuit breaker. The residual-current circuit breaker can e.g. be with or without over-current protection (RCD or RCBO).

The central interface 20 and the local electrical system 30 are spatially separate, e.g. by electrically conductive cabling spanning a distance larger than 1 meter, larger than 5 meter, or larger than 10 meter. As such, the central interface switch 21, e.g. residual-current circuit breaker, is spatially separated from the local electrical system 30 as well.

As illustrated in FIG 1, controller 3 of the local interface 10 monitors a status "S" of the local electrical system 30. The monitored status "S" can for example comprise health parameters indicative of normal operating conditions or fault conditions of the local electrical system, and/or any devices thereof, such as an electric vehicle, a charging device, a battery unit, or a local power generator. The status "S" can e.g. be monitored by the controller 3 being in communication with the local electrical system 30 and/or individual devices thereof, for example by a wired or wireless data connection. The controller 3 can for example be provided by a processor or microcontroller, e.g. implemented on an integrated circuit chip. The controller 3 may comprise any type of software and/or hardware control circuit.

Responsive to detecting a fault condition based on the monitored status "S" of the local electrical system 30, the controller 3 activates a leakage circuit 4 of the local interface 10 to generate a residual current on the central interface 20. This causes a triggering of the residual-current circuit breaker of the central interface switch 21 for disconnecting the electrical power E. For example, the leakage circuit 4 may be activated in case the local interface switch 11, e.g. an internal switch of the local interface 10, fails to respond and/or fails to cut the connection.

According to some regulatory bodies, introduction of a leakage current may not be allowed during normal operating conditions. For this reason, the method and local interface 10 described herein introduce a leakage current after detection of a fault condition. Hence the local electrical system 30 is no longer in a state of normal operating condition.

In some embodiments, for detecting the fault condition, the method may comprise measuring a value in voltage, current, power, frequency, phase, or noise on power lines 41, 42 arranged for transferring the electrical power E between the central interface 20 and the local electrical system 30. The power lines 41, 42 can e.g. be provided by electrically conductive wiring or cabling, extending between the central interface 20 and the local electrical system 30 via the local interface 10 and arranged for transferring the electrical power E therebetween. The step of measuring a value can e.g. be performed by the controller 3, e.g. by having one or more signal lines connecting the power lines 41, 42 with the controller 3. It is noted that, while the present figures show only two power lines (41,42), in general these could be any number of power lines, e.g. three or more power lines in case of using 3-phase power. For example, the leakage circuit 4 may create a leakage current on any one or more of the power lines, e.g. between a respective power line and ground.

Alternatively, the step of measuring can be performed by an external measurement device arranged for measuring the value on the power lines 41, 42 and coupled to the controller 3 for transmitting the measured value. Such measurement devices may include a voltage meter, an ampere meter, a power meter, an oscilloscope, a noise meter, or an electro-magnetic interference EMI meter.

The measured value may be compared with a predetermined tolerance value to calculate a deviation from the predetermined tolerance value. The predetermined tolerance value can e.g. be derived from a regional applicable technical standard, such as EN 50549 or IEC 61851-1, or can be defined as a comparative parameter based on properties of the local electrical system 30, such as nominal voltage, nominal current, nominal continuous power, peak power, terminal resistance, inductance, time constant, thermal resistance, and ambient temperature, as well as on properties of the central interface 20, such as applied voltage, current and power. The comparison can e.g. be performed by the controller 3, or by an external processing unit.

Subsequently, e.g. responsive to the calculated deviation exceeding a threshold, it may be established that a fault condition occurs. For example, after calculating a deviation from the predetermined tolerance value, the controller 3 or any other processing unit may compare the calculated deviation to the threshold. Upon determining that the calculated deviation exceeds the threshold, the controller 3 may establish that there is a fault condition in the local electrical system. The threshold may be a constant value, or may be adjusted in time e.g. to compensate for wear or thermal effects. The threshold can e.g. be a safety factor ranging between -20% and 20% of the predetermined tolerance value, preferably ranging between -10% and 10% of the predetermined tolerance value, more preferably ranging between -5% and 5% of the predetermined tolerance value. Accordingly, the threshold can provide an additional safety margin for establishing the fault condition, to prevent inadvertently generating a false positive signal that would activate the leakage circuit 4 of the local interface 10, e.g. due to a noisy measurement signal.

In some exemplary embodiments, a leakage current of the local electrical system 30 may be measured, and responsive to the measured leakage current exceeding a threshold, it can be established that a fault condition occurs. Measurement of the leakage current of the local electrical system can be performed by any residual current detection device, e.g. coupled to the controller 3. Alternatively, or additionally, the method may comprise detecting any other issue with the local electrical system to establish that a fault condition occurs, e.g. by a measurement device or controller 3 of the local interface 10. For example, detecting that a cable is improperly connected, that electronic components or connectors are wet, or in case the local electrical system is arranged for charging a battery unit, detecting e.g. that the battery unit is malfunctioning or defect.

In accordance with the claimed invention, the local interface 10 comprises a local interface switch 11, or contactor, and the method further comprises, prior to the step of activating the leakage circuit of the local interface 10, determining, by the controller 3, whether the local interface switch 11 is activatable for disconnecting the electrical power. Responsive to determining that the local interface switch 11 is activatable, the method comprises generating a control signal, e.g. by the controller 3, for activating the local interface switch 11. For example, the local interface switch 11 may be activatable when a recoverable failure occurs in the local electrical system 30, such as a failure caused by a software error.

The method further comprises the step of otherwise, thus responsive to determining that the local interface switch 11 is not activatable, activating the leakage circuit 4 to generate a residual current on the central interface 20 causing a triggering of the residual-current circuit breaker of the central interface switch 21 for disconnecting the electrical power. For example, the local interface switch 11, or contactor, may not be activatable when an unrecoverable failure occurs in the local electrical system 30, such as a failure caused by contact welding. In this way, a distinction can be made between recoverable and unrecoverable failures, wherein the leakage circuit 4 is activated only in response to detecting an unrecoverable failure, for disconnecting the electrical power E via the residual-current circuit breaker. Recoverable failures, in contrast, can be resolved by the controller 3 activating the local interface switch 11.

The step of determining whether the local interface switch 11 is activatable can for example be performed by measuring a voltage on auxiliary contacts 12 of the local interface switch 11. For example, the local interface switch 11 may comprise one or more auxiliary contacts 12, or diagnostic terminals, electrically connected to the main conductive path of the local interface switch 11, and arranged for diagnosing an applied voltage, current, or power on the local interface switch 11. The controller 3, or an external measurement device coupled to the controller 3, can e.g. be connected to the auxiliary contacts 12 to measure the voltage, to determine whether the local interface switch 11 is activatable. For example, in case a measured voltage on the auxiliary contacts 12 is higher than a predetermined threshold, the controller 3 may establish that the local interface switch 11 is activatable. Conversely, in case a measured voltage on the auxiliary contacts 12 is lower than a predetermined threshold, the controller 3 may establish that the local interface switch 11 is not activatable. Accordingly, the activatability of the local interface switch 11 can be diagnosed by the local interface 10.

After the step of generating a control signal for activating the local interface switch 11, the local interface 10 may be manually operable for reconnecting the electrical power E. For example, the local interface 10 may comprise a button or lever, that is manually operable for reconnecting the electrical power. In this way, operation of the local electrical system can be resumed by a deliberate user action, e.g. as opposed to an automatic signal generated by the controller 3, to prevent that the local electrical system is inadvertently activated before removing the root cause of the failure.

As illustrated, the central interface 20 is typically distanced, or spatially separated, from the local electrical system 30, e.g. by at least one meter of wiring or other power lines, more typically at least five meter, or even more than ten meter. In some embodiments, the wiring can have a length of more than one hundred meters, e.g. up to a kilometer, or more, depending on the physical distance between the central interface, which may be accessible from a building on a real estate parcel, and the local electrical system, e.g. a local power generator such as a PV system or an EV charging device, which may be located e.g. anywhere on a real estate parcel. In relatively sparsely populated rural areas, for example, a real estate parcel can cover multiple square km, with limited access to the central interface. In other examples, e.g. in relatively densely populated urban areas, the distance between the central interface 20 and the local electrical system 30 is limited, for example in a range up to 50 meter, up to 30 meter, or less.

The local interface 10 may comprise a bi-directional charging station, e.g. arranged for charging and/or discharging a battery such as a vehicle battery or home battery. The bi-directional charging system can also be coupled to other types of electrical power E sources in a one-directional fashion, e.g. to a photo voltaic PV system arranged for generating and supplying electrical power E, to charge one or more devices or power storage units. In both directions, the controller 3 may be able to activate the leakage circuit 4 of the local interface 10 responsive to detecting a fault condition based on the monitored status "S" of the local electrical system 30, to generate a residual current on the central interface 20 causing a triggering of the residual-current circuit breaker of the central interface switch 21 for disconnecting the electrical power E.

As an example, the local interface 10 can comprise an AC/AC charger, wherein, during transferring via the local interface 10, AC electrical power E is transferred between the central interface 20 and the local electrical system 30, and activating a leakage circuit 4 of the local interface 10 generates an AC residual current on the central interface 20 causing a triggering of the residual-current circuit breaker of the central interface switch 21 for disconnecting the electrical power E.

Alternatively, AC electrical power E may be transferred between the central interface 20 and the local electrical system 30, and the step of activating a leakage circuit 4 may comprise generating a DC residual current on the central interface 20, causing a triggering of the residual-current circuit breaker for disconnecting the electrical power E. In another variant, DC electrical power E may be transferred between the central interface 20 and the local electrical system 30, and the step of activating a leakage circuit 4 may comprise generating a DC residual current on the central interface 20, to trigger the residual-current circuit breaker and disconnect the electrical power. In this way, the step of responding to a fault condition is independent of the type of electrical power E transferred between the central interface and system 20, 30, as well as the type of residual-current circuit breaker.

As illustrated, the local interface 10 may further comprise an auxiliary electrical power supply 6 arranged for supplying auxiliary electrical power E to the controller 3, independent of the electrical power E transferred between the central interface 20 and the local electrical system 30. The auxiliary electrical power supply 6 can for example comprise a battery unit, a capacitor, or a local power generator, such as a photovoltaic system. For example, the controller 3 may be arranged for primarily receiving electrical power E from the local electric grid 20 and/or the local electric system 30, e.g. via wiring extending therebetween. The controller 3 may be arranged for receiving auxiliary electrical power E from the auxiliary power supply, e.g. via separate cabling or power lines.

Upon startup of the local interface 10, the controller 3 may be arranged for testing whether the central interface switch 21 is operable for disconnecting the electrical power E, and responsive to determining that the central interface switch 21 is operable, allowing the transferring. The residual-current circuit breaker 22 of the central interface switch 21 may e.g. be a testable and resettable device - e.g. comprising a test button that safely creates a small leakage condition, and another button that resets the conductors after a fault condition has been cleared. Such a testable and resettable device can be tested by the controller 3, e.g. upon startup or upon connecting the local electrical system to a device, such as an electric vehicle e.g. for charging the vehicle. In this way, it can be prevented that a detected fault condition cannot be addressed by a triggering of the residual-current circuit breaker of the central interface switch 21.

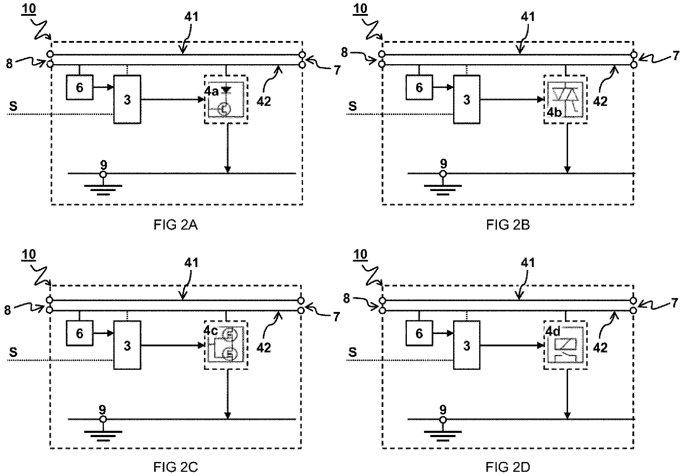

FIGs 2A-D illustrates other or further embodiments of the local interface 10 configured to perform the method described herein. The local interface 10 comprises first electrical terminals 7, arranged for electrically connecting with a central interface. Second electrical terminals 8 are arranged for electrically connecting with a local electrical system. In principle, the terminals may comprises any form of electrical connection. For example, the terminals may comprise screw or clamp connections, solder wire, press contact, or any other type of connector. The terminals may be internal or exterior of the local interface 10. The local interface 10 is arranged for transferring electrical power (E) between the central interface and the local electrical system, and the central interface is connected to a main grid, for transferring the electrical power (E) therebetween, via a central interface switch comprising a residual-current circuit breaker.

A leakage circuit is arranged for generating a residual current on the central interface, and a controller 3 is configured to monitor a status "S" of the local electrical system 30. Responsive to detecting a fault condition based on the monitored status "S" of the local electrical system, the controller 3 is configured to activate the leakage circuit 4, causing a triggering of the residual-current circuit breaker of the central interface switch for disconnecting the electrical power.

The generated residual current can e.g. be larger than 6 mA DC and/or 30 mA AC. Alternatively, the generated residual current may be larger than an allowable residual current value defined in an applicable standard, e.g. for a specific technical field and/or geographical region, such as IEC 61851-1 related to EV supply equipment for charging electric road vehicles. In this way, triggering of the residual-current circuit breaker can be performed independent of the type of fault condition detecting at the local electrical system. Some fault conditions, for example, may generate limited to no leakage currents at all, while they may still be indicative of an electrical shock hazard. By generating a residual current larger than 6 mA DC and/or 30 mA AC, the residual-current circuit breaker is triggered, thereby disconnecting the electrical power (E) regardless of the magnitude of the leakage current detected at the local electrical system.

Preferably, e.g. as illustrated in FIGs 2A-D, the first and second terminals 7, 8 provide live, and optional neutral, connections for transferring the electrical power (E), and the local interface 10 comprises a protective earth terminal 9 for providing a ground connection. The leakage circuit 4 may comprise a switchable connection between the first and second terminals 7, 8 and the protective earth terminal 9, and the switchable connection may e.g. be switchable between a first position, in which an electrical connection between the first and second terminals 7, 8 and the protective earth terminal 9 is interrupted, or disconnected, and a second position, in which the electrical connection is closed, or connected. Controller 3 can e.g. be arranged for controlling the switchable connection between the first and second position.

In this way, the leakage circuit 4 provides a switchable connection between at least one of the live power lines 7 and/or 8and the ground connection 9. As a result, when the controller 3 activates the leakage circuit 4, leakage current flows from the power terminals 7, 8 towards the ground, thereby generating a residual current on the central interface, which causes a triggering of the residual-current circuit breaker of the central interface switch for disconnecting the electrical power.

The active switching element 4a, 4b, 4c, 4d can for example comprises one or more of a unipolar current (semiconductor) switching circuit for generating a DC residual current (FIG 2A), a bipolar current (semiconductor) switching circuit for generating an AC residual current (FIG 2B), a solid state relay switching circuit for generating both AC and DC residual currents (FIG 2C), and a relay switching circuit for generating both AC and DC residual current in case of high electrical insulation and infrequent activation of the leakage circuit (FIG 2D). For example, an implementation based on the relay switching circuit may be chosen in order to improve electrical insulation between the microcontroller and the first and second terminals.

The local interface 10 may further comprise an auxiliary electrical power supply 6 arranged for supplying auxiliary electrical power (E) to the controller, independent from the electrical power (E) between the central interface and the local electrical system, e.g. as illustrated in FIGs 2A-D. The auxiliary electrical power supply 6 can for example comprise a battery unit, a capacitor, or a power generator. In this way, the controller 3 can remain active in case the electrical power (E) transferred between the central interface 20 and the local electrical system 30 is interrupted or lost.

For the purpose of clarity and a concise description, features are described herein as part of the same or separate embodiments, however, it will be appreciated that the scope of the invention may include embodiments having combinations of all or some of the features described. For example, while embodiments were shown for the method and corresponding local interface, also alternative ways may be envisaged by those skilled in the art having the benefit of the present disclosure for achieving a similar function and result. E.g. FIGs 1 and 2 may be combined or split up into one or more alternative components. The various elements of the embodiments as discussed and shown offer certain advantages, such as providing a dual protection mechanism for a local electric system. Of course, it is to be appreciated that any one of the above embodiments or processes may be combined with one or more other embodiments or processes to provide even further improvements in finding and matching designs and advantages. It is appreciated that this disclosure offers particular advantages to local electrical systems, and in general can be applied for any application wherein electrical protection devices are useful or required.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage.

## Claims

1. A method comprising
transferring, via a local interface (10), electrical power (E) between a central interface (20) and a local electrical system (30), wherein the transferring of electrical power (E) comprises sending electrical current (I) back and forth via local power lines (41,42) between the local interface (10) and the central interface (20), wherein the central interface (20) is electrically connected to transfer the electrical power (E) to and/or from an electrical grid (50) via a central interface switch (21), wherein the central interface switch (21) comprises a residual-current circuit breaker for severing the electrical connection to the electrical grid (50) when an imbalance occurs in the electrical current (I) being sent back and forth via the local power lines (41,42);
monitoring, by a controller (3) of the local interface (10), a status (S) of the local electrical system (30); and
responsive to detecting a fault condition in the monitored status (S) of the local electrical system (30), activating a leakage circuit (4) of the local interface (10) to generate a current imbalance on the local power lines (41,42) for causing the central interface (20) to sever the local electrical system (30) from the electrical grid (50) by triggering of the residual-current circuit breaker of the central switch (21)
**characterized in that** the local interface (10) comprises a local interface switch (11) configured to selectively disconnect the local electrical system (30) from the local power lines (41,42), wherein responsive to detecting the fault condition in the monitored status (S) of the local electrical system (30),
as a primary means of protection, the controller (3) initially sends a control signal to the local interface switch (11) causing the local interface (10) to sever the local electrical system (30) from the electrical grid (50);
as a secondary means of protection, the controller (3), subsequently and only responsive to determining that the local interface switch (11) is not operable to disconnect the electrical power, activates the leakage circuit (4) to generate the current imbalance on the local power lines (41,42) causing the central interface (20) to sever the local electrical system (30) from the electrical grid (50).

2. The method according to claim 1, wherein the monitoring status (S) of the local electrical system (30) comprises monitoring the local power lines (41, 42) to perform a measurement of a voltage, current, power, frequency, phase, and/or noise transferred via the local power lines (41, 42) to and/or from the local electrical system (30), wherein the detecting the fault condition comprises determining that the measurement deviates from a threshold tolerance value.

3. The method according to claim 1 or 2, wherein the monitoring status (S) of the local electrical system (30) comprises receiving a status signal from the local electrical system (30), wherein the detecting the fault condition is based on the status signal indicating a fault condition in the local electrical system (30), or an absence of the status signal indicating a fault condition in the local electrical system (30).

4. The method according to any of the preceding claims, wherein the local interface (10) is operable for reconnecting the local electrical system (30) based on the monitored status (S) indication that the fault condition has been removed and/or a control signal indicating that the transferring of electrical power (E) is to be resumed.

5. The method according to any of the preceding claims, wherein the central interface (20) is distanced from the local interface (10) by more than five meter along the local power lines (41,42) there between.

6. The method according to any of the preceding claims, wherein the local interface (10) comprises a bi-directional charging station.

7. The method according to any of the preceding claims, wherein electrical power (E) is transferred over the local power lines (41,42) by alternating current, AC, wherein the leakage circuit (4) of the local interface (10) is configured to generate an AC residual current on the local power lines (41,42).

8. The method according to any of the preceding claims, wherein the local interface (10) comprises a battery (6) configured to supply electrical power for operating the controller (3) and leakage circuit (4), independent of any fault conditions occurring in the electrical power (E) transferred via the local power lines (41,42).

9. The method according to any of the preceding claims, comprising
testing, by the controller (3), upon initiating of the local interface (10) whether the central interface switch (21) is operable to disconnect the electrical power (E) by activating the leakage circuit (4), and
only responsive to determining the central interface switch (21) is operable to disconnect the electrical power (E) by the activating of the leakage circuit, allowing, by the controller (3), the transferring of electrical power via the local interface (10).

10. A local interface (10) configured to transfer electrical power (E) between an electrical grid (50) and a local electrical system (30), the local interface (10) comprising
electrical connections (7,8) configured to connect to the local electrical system (30) and connect to local power lines (41,42) for the transferring of electrical power (E) via the local interface (10) between the local electrical system (30) and a central interface (20) to the electrical grid (50), wherein the transferring of electrical power (E) comprises sending electrical current (I) back and forth via the local power lines (41,42) between the local interface (10) and the central interface (20);
a leakage circuit (4) which, when activated, is configured to generate a current imbalance on the local power lines (41,42) for triggering a residual-current circuit breaker at the central interface (20);
a controller (3) configured to monitor a status (S) of the local electrical system (30), and responsive to detecting a fault condition in the monitored status (S) of the local electrical system (30), activating the leakage circuit (4) for severing the local electrical system (30) from the electrical grid (50); **characterized by**
a local interface switch (11) configured to selectively disconnect the local electrical system (30) from the local power lines (41,42), wherein responsive to detecting the fault condition in the monitored status (S) of the local electrical system (30),
as a primary means of protection, the controller (3) initially sends a control signal to the local interface switch (11) causing the local interface (10) to sever the local electrical system (30) from the electrical grid (50);
as a secondary means of protection, the controller (3), subsequently and only responsive to determining that the local interface switch (11) is not operable to disconnect the electrical power, activates the leakage circuit (4) to generate the current imbalance on the local power lines (41,42) causing the central interface (20) to sever the local electrical system (30) from the electrical grid (50).

11. The local interface (10) according to any of the preceding claims, wherein the leakage circuit (4) is configured to generate a residual current of at least 6 mA DC and/or at least 30 mA AC.

12. The local interface (10) according to any of the preceding claims, wherein the local interface (10) comprises a protective earth terminal (9) for providing a ground connection, wherein the leakage circuit (4) comprises a switchable electrical connection between at least one of the local power lines (41,42) and the protective earth terminal (9), wherein the switchable electrical connection is switchable between a first position, in which an electrical connection between the at least one of the local power lines (41,42) and the protective earth terminal (9) is interrupted, and a second position, in which the electrical connection is closed, and wherein the controller (3) is arranged for controlling the switchable connection between the first and second position.

13. The local interface (10) according to the preceding claim, wherein the switchable connection comprises one or more active switching elements (4a, 4b, 4c, 4d) selected from the group consisting of
a unipolar current switching circuit for generating a DC residual current;
a bipolar current switching circuit for generating an AC residual current;
a solid state relay switching circuit for generating both AC and DC residual currents; and
a relay switching circuit for generating both AC and DC residual current in case of high electrical insulation and infrequent activation of the leakage circuit.

14. A system (100) comprising the local interface (10) according to claim 10 connected to the central interface (20) via the local power lines (41,42), wherein the central interface (20) is electrically connected to transfer the electrical power (E) to and/or from the electrical grid (50) via a central interface switch (21), wherein the central interface switch (21) comprises the residual-current circuit breaker for severing the electrical connection to the electrical grid (50) when an imbalance occurs in the electrical current (I) being sent back and forth via the local power lines (41,42).

## Patentansprüche

1. Verfahren, umfassend:
Übertragen über eine lokale Schnittstelle (10) einer elektrischen Leistung (E) zwischen einer Zentralschnittstelle (20) und einem lokalen elektrischen System (30), wobei das Hin- und Herübertragen von elektrischer Leistung (E) das Senden von Strom (I) über lokale Stromleitungen (41, 42) zwischen der lokalen Schnittstelle (10) und der Zentralschnittstelle (20) hin und her umfasst, wobei die Zentralschnittstelle (20) elektrisch verbunden ist, um die elektrische Leistung (E) zu und/oder von einem Stromnetz (50) über einen Zentralschnittstellenschalter (21) zu übertragen, wobei der Zentralschnittstellenschalter (21) einen Reststrom-Schutzschalter zum Trennen der elektrischen Verbindung zu dem Stromnetz (50) umfasst, wenn ein Ungleichgewicht des Stroms (I), der über die lokalen Stromleitungen (41, 42) hin- und her gesendet wird, auftritt;
Überwachen durch eine Steuervorrichtung (3) der lokalen Schnittstelle (10) eines Status (S) des lokalen elektrischen Systems (30); und
als Reaktion auf das Erfassen eines Fehlerzustands in dem überwachten Status (S) des lokalen elektrischen Systems (30), Aktivieren einer Leckageschaltung (4) der lokalen Schnittstelle (10), um ein Stromungleichgewicht auf den lokalen Stromleitungen (41, 42) zu erzeugen, um die Zentralschnittstelle (20) zu veranlassen, das lokale elektrische Systems (30) von dem Stromnetz (50) durch Auslösen des Reststrom-Schutzschalters des Zentralschalters (21) zu trennen,
**dadurch gekennzeichnet, dass** die lokale Schnittstelle (10) einen lokalen Schnittstellenschalter (11) umfasst, der dazu konfiguriert ist, selektiv das lokale elektrische System (30) von den lokalen Stromleitungen (41, 42) abzutrennen, wobei als Reaktion auf das Erfassen des Fehlerzustands in dem überwachten Status (S) des lokalen elektrischen Systems (30),
als ein Hauptschutzmittel die Steuervorrichtung (3) anfänglich ein Steuersignal an den lokalen Schnittstellenschalter (11) sendet, das die lokale Schnittstelle (10) veranlasst, das lokale elektrische System (30) von dem Stromnetz (50) zu trennen;
als ein Hilfsschutzmittel die Steuervorrichtung (3) anschließend und nur als Reaktion auf Bestimmen, dass der lokale Schnittstellenschalter (11) nicht betätigbar ist, um den Strom abzuschalten, die Leckageschaltung (4) aktiviert, um das Stromungleichgewicht auf den lokalen Stromleitungen (41, 42) zu erzeugen, was die Zentralschnittstelle (20) dazu veranlasst, das lokale elektrische System (30) von dem Stromnetz (50) zu trennen.

2. Verfahren nach Anspruch 1, wobei der Überwachungsstatus (S) des lokalen elektrischen Systems (30) das Überwachen der lokalen Stromleitungen (41, 42) umfasst, um eine Messung einer Spannung, eines Stroms, einer Leistung, einer Frequenz, einer Phase und/oder eines Rauschen durchzuführen, die über die lokalen Stromleitungen (41, 42) zu und/oder von dem lokalen elektrischen System (30) übertragen werden, wobei das Erfassen des Fehlerzustands das Bestimmen umfasst, dass die Messung von einem Schwellentoleranzwert abweicht.

3. Verfahren nach Anspruch 1 oder 2, wobei der Überwachungsstatus (S) des lokalen elektrischen Systems (30) das Empfangen eines Statussignals von dem lokalen elektrischen System (30) umfasst, wobei das Erfassen des Fehlerzustands darauf basiert, dass das Statussignal einen Fehlerzustand in dem lokalen elektrischen System (30) angibt, oder eine Abwesenheit des Statussignals einen Fehlerzustand in dem lokalen elektrischen System (30) angibt.

4. Verfahren nach einem der vorstehenden Ansprüche, wobei die lokale Schnittstelle (10) zum Wiederverbinden des lokalen elektrischen Systems (30) basierend auf der Angabe des überwachten Zustands (S), dass der Fehlerzustand entfernt wurde und/oder ein Steuersignal angibt, dass das Übertragen elektrischer Leistung (E) wieder aufgenommen werden soll, betätigbar ist.

5. Verfahren nach einem der vorstehenden Ansprüche, wobei die Zentralschnittstelle (20) von der lokalen Schnittstelle (10) um mehr als fünf Meter entlang der lokalen Stromleitungen (41, 42) dazwischen entfernt ist.

6. Verfahren nach einem der vorstehenden Ansprüche, wobei die lokale Schnittstelle (10) eine bidirektionale Ladestation umfasst.

7. Verfahren nach einem der vorstehenden Ansprüche, wobei elektrische Leistung (E) über die lokalen Stromleitungen (41, 42) durch Wechselstrom, AC, übertragen wird, wobei die Leckageschaltung (4) der lokalen Schnittstelle (10) dazu konfiguriert ist, einen AC-Reststrom auf den lokalen Stromleitungen (41, 42) zu erzeugen.

8. Verfahren nach einem der vorstehenden Ansprüche, wobei die lokale Schnittstelle (10) eine Batterie (6) umfasst, die dazu konfiguriert ist, Strom zum Betreiben der Steuervorrichtung (3) und der Leckageschaltung (4) unabhängig von irgendwelchen Fehlerzuständen, die in der elektrischen Leistung (E), die über die lokalen Stromleitungen (41, 42) übertragen wird, auftritt, zu liefern.

9. Verfahren nach einem der vorstehenden Ansprüche, weiter umfassend
Testen durch die Steuervorrichtung (3) beim Initiieren der lokalen Schnittstelle (10), ob der Zentralschnittstellenschalter (21 betätigbar ist, um die elektrische Leistung (E) durch Aktivieren der Leckageschaltung (4) abzutrennen, und
nur als Reaktion auf Bestimmen, dass der Zentralschnittstellenschalter (21) betätigbar ist, um die elektrische Leistung (E) durch das Aktivieren der Leckageschaltung abzutrennen, das Übertragen von Strom über die lokale Schnittstelle (10) durch die Steuervorrichtung (3) zu erlauben.

10. Lokale Schnittstelle (10), die dazu konfiguriert ist, elektrische Leistung (E) zwischen einem Stromnetz (50) und einem lokalen elektrischen System (30) zu übertragen, wobei die lokale Schnittstelle (10) Folgendes umfasst
elektrische Verbindungen (7, 8), die dazu konfiguriert sind, mit dem lokalen elektrischen System (30) und mit den lokalen Stromleitungen (41, 42) zum Übertragen elektrischer Leistung (E) über die lokale Schnittstelle (10) zwischen dem lokalen elektrischen System (30) und einer Zentralschnittstelle (20) an das Stromnetz (50) zu verbinden, wobei das Übertragen von elektrischer Leistung (E) das Hin- und Hersenden von Strom (I) über die lokalen Stromleitungen (41, 42) zwischen der lokalen Schnittstelle (10) und der Zentralschnittstelle (20) umfasst;
eine Leckageschaltung (4), die, wenn sie aktiviert wird, dazu konfiguriert ist, ein Stromungleichgewicht auf den lokalen Stromleitungen (41, 42) zum Auslösen eines Reststrom-Schutzschalters an der Zentralschnittstelle (20) zu erzeugen;
eine Steuervorrichtung (3), die dazu konfiguriert ist, einen Status (S) des lokalen elektrischen Systems (30) zu überwachen, und als Reaktion auf Erfassen eines Fehlerzustands in dem überwachten Zustand (S) des lokalen elektrischen Systems (30) die Leckageschaltung (4) zum Trennen des lokalen elektrischen Systems (30) von dem Stromnetz (50) zu aktivieren;
**dadurch gekennzeichnet, dass**
ein lokaler Schnittstellenschalter (11) dazu konfiguriert ist, selektiv das lokale elektrische System (30) von den lokalen Stromleitungen (41, 42) abzutrennen, wobei als Reaktion auf das Erfassen des Fehlerzustands in dem überwachten Zustand (S) des lokalen elektrischen Systems (30),
als ein Hauptschutzmittel die Steuervorrichtung (3) anfänglich ein Steuersignal an den lokalen Schnittstellenschalter (11) sendet, das die lokale Schnittstelle (10) veranlasst, das lokale elektrische System (30) von dem Stromnetz (50) zu trennen;
als ein Hilfsschutzmittel die Steuervorrichtung (3) anschließend und nur als Reaktion auf Bestimmen, dass der lokale Schnittstellenschalter (11) nicht betätigbar ist, um den Strom abzuschalten, die Leckageschaltung (4) aktiviert, um das Stromungleichgewicht auf den lokalen Stromleitungen (41, 42) zu erzeugen, was die Zentralschnittstelle (20) dazu veranlasst, das lokale elektrische System (30) von dem Stromnetz (50) zu trennen.

11. Lokale Schnittstelle (10) nach einem der vorstehenden Ansprüche, wobei die Leckageschaltung (4) dazu konfiguriert ist, einen Reststrom von mindestens 6 mA DC und/oder mindestens 30 mA AC zu erzeugen.

12. Lokale Schnittstelle (10) nach einem der vorstehenden Ansprüche, wobei die lokale Schnittstelle (10) eine Schutzerdungsklemme (9) zum Bereitstellen eines Erdanschlusses umfasst, wobei die Leckageschaltung (4) eine umschaltbare elektrische Verbindung zwischen mindestens einer der lokalen Stromleitungen (41, 42) und der Schutzerdungsklemme (9) umfasst, wobei die umschaltbare elektrische Verbindung zwischen einer ersten Position, in der eine elektrische Verbindung zwischen der mindestens einen der lokalen Stromleitungen (41, 42) und der Schutzerdungsklemme (9) unterbrochen ist, und einer zweiten Position, in der die elektrische Verbindung geschlossen ist, umschaltbar ist, und wobei die Steuervorrichtung (3) dazu eingerichtet ist, die umschaltbare Verbindung zwischen der ersten und der zweiten Position zu steuern.

13. Lokale Schnittstelle (10) nach dem vorstehenden Anspruch, wobei die umschaltbare Verbindung ein oder mehrere aktive Schaltelemente (4a, 4b, 4c, 4d) umfasst, die aus der Gruppe ausgewählt sind, die besteht aus
einer unipolaren Stromschaltung zum Erzeugen eines DC-Reststroms;
einer bipolaren Stromschaltung zum Erzeugen eines AC-Reststroms;
einer Halbleiterrelaisschaltung zum Erzeugen sowohl von AC-Reststrom als auch von DC-Reststrom; und
eine Relaisschaltung zum Erzeugen von sowohl AC-Reststrom als auch DC-Reststrom im Falle einer hohen elektrischen Isolierung und seltener Aktivierung der Leckageschaltung.

14. System (100), das die lokale Schnittstelle (10) nach Anspruch 10 umfasst, die mit der Zentralschnittstelle (20) über die lokalen Stromleitungen (41, 42) verbunden ist, wobei die Zentralschnittstelle (20) elektrisch verbunden ist, um die elektrische Leistung (E) über einen Zentralschnittstellenschalter (21) zu und/oder von dem Stromnetz (50) zu übertragen, wobei der Zentralschnittstellenschalter (21) den Reststrom-Schutzschalter zum Trennen der elektrischen Verbindung mit dem Stromnetz (50) umfasst, wenn ein Ungleichgewicht des elektrischen Stroms (I), der zwischen den lokalen Stromleitungen (41, 42) hin und her gesendet wird, auftritt.

## Revendications

1. Procédé comprenant les étapes suivantes :
transférer, via une interface locale (10), de l'énergie électrique (E) entre une interface centrale (20) et un système électrique local (30), dans lequel le transfert d'énergie électrique (E) comprend l'envoi d'un courant électrique (I) dans un sens puis dans l'autre sur des lignes électriques locales (41, 42) entre l'interface locale (10) et l'interface centrale (20), dans lequel l'interface centrale (20) est connectée électriquement pour transférer l'énergie électrique (E) vers et/ou depuis un réseau électrique (50) par l'intermédiaire d'un interrupteur d'interface centrale (21), dans lequel l'interrupteur d'interface centrale (21) comprend un disjoncteur différentiel pour couper la connexion électrique vers le réseau électrique (50) quand un déséquilibre se produit dans le courant électrique (I) qui est envoyé dans un sens puis dans l'autre sur les lignes électriques locales (41, 42) ;
surveiller, au moyen d'un contrôleur (3) de l'interface locale (10), un statut (S) du système électrique local (30) ; et
en réponse à la détection d'un état de défaut dans le statut surveillé (S) du système électrique local (30), activer un circuit de fuite (4) de l'interface locale (10) afin de produire un déséquilibre de courant sur les lignes électriques locales (41, 42) pour que l'interface centrale (20) sépare le système électrique local (30) du réseau électrique (50) par le déclenchement du disjoncteur différentiel de l'interrupteur central (21),
**caractérisé en ce que** l'interface locale (10) comprend un interrupteur d'interface locale (11) configuré pour déconnecter sélectivement le système électrique local (30) des lignes électriques locales (41, 42), dans lequel en réponse à la détection de l'état de défaut dans le statut surveillé (S) du système électrique local (30),
comme moyen de protection principal, le contrôleur (3) envoie initialement un signal de commande à l'interrupteur d'interface locale (11) qui fait que l'interface locale (10) sépare le système électrique local (30) du réseau électrique (50) ;
comme moyen de protection secondaire, le contrôleur (3), à la suite et uniquement en réponse à la détermination que l'interrupteur d'interface locale (11) n'est pas apte à déconnecter l'énergie électrique, active le circuit de fuite (4) pour produire le déséquilibre de courant sur les lignes électriques locales (41, 42) qui fait que l'interface centrale (20) sépare le système électrique local (30) du réseau électrique (50).

2. Procédé selon la revendication 1, dans lequel le statut de surveillance (S) du système électrique local (30) comprend le fait de surveiller les lignes électriques locales (41, 42) pour réaliser une mesure de tension, intensité, puissance, fréquence, phase et/ou bruit transférée via les lignes électriques locales (41, 42) vers et/ou depuis le système électrique local (30), dans lequel la détection de l'état de défaut comprend le fait de déterminer que la mesure dévie par rapport à une valeur limite tolérable.

3. Procédé selon la revendication 1 ou 2, dans lequel le statut de surveillance (S) du système électrique local (30) comprend le fait de recevoir un signal de statut provenant du système électrique local (30), dans lequel la détection de l'état de défaut est basée sur le signal de statut indiquant un état de défaut dans le système électrique local (30), ou une absence du signal de statut indiquant un état de défaut dans le système électrique local (30).

4. Procédé selon l'une quelconque des revendications précédentes, dans lequel l'interface locale (10) peut être utilisée pour reconnecter le système électrique local (30) en se basant sur l'indication du statut surveillé (S) que l'état de défaut a été supprimé et/ou un signal de commande indiquant que le transfert d'énergie électrique (E) doit reprendre.

5. Procédé selon l'une quelconque des revendications précédentes, dans lequel l'interface centrale (20) se trouve à une distance de plus de cinq mètres de l'interface locale (10) le long des lignes électriques locales (41, 42) situées entre elles.

6. Procédé selon l'une quelconque des revendications précédentes, dans lequel l'interface locale (10) comprend une station de recharge bidirectionnelle.

7. Procédé selon l'une quelconque des revendications précédentes, dans lequel l'énergie électrique (E) est transférée sur les lignes électriques locales (41, 42) par un courant alternatif, ou c. a., dans lequel le circuit de fuite (4) de l'interface locale (10) est configuré pour produire un courant résiduel alternatif sur les lignes électriques locales (41, 42).

8. Procédé selon l'une quelconque des revendications précédentes, dans lequel l'interface locale (10) comprend une batterie (6) configurée pour fournir de l'énergie électrique pour faire fonctionner le contrôleur (3) et le circuit de fuite (4), indépendamment de tout état de défaut se produisant dans l'énergie électrique (E) transférée sur les lignes électriques locales (41, 42).

9. Procédé selon l'une quelconque des revendications précédentes, comprenant les opérations suivantes :
vérifier, par le contrôleur (3), lors du démarrage de l'interface locale (10), si l'interrupteur d'interface centrale (21) est apte à déconnecter l'énergie électrique (E) en activant le circuit de fuite (4), et
uniquement en réponse à la détermination que l'interrupteur d'interface centrale (21) est apte à déconnecter l'énergie électrique (E) par l'activation du circuit de fuite, permettre, par le contrôleur (3), le transfert d'énergie électrique via l'interface locale (10).

10. Interface locale (10) configurée pour transférer de l'énergie électrique (E) entre un réseau électrique (50) et un système électrique local (30), l'interface locale (10) comprenant :
des connexions électriques (7, 8) configurées pour se connecter au système électrique local (30) et pour se connecter à des lignes électriques locales (41, 42) pour le transfert d'énergie électrique (E) par l'intermédiaire de l'interface locale (10) entre le système électrique local (30) et une interface centrale (20) vers le réseau électrique (50), dans lequel le transfert d'énergie électrique (E) comprend l'envoi d'un courant électrique (I) dans un sens puis dans l'autre sur les lignes électriques locales (41, 42) entre l'interface locale (10) et l'interface centrale (20) ;
un circuit de fuite (4) qui, lorsqu'il est activé, est configuré pour produire un déséquilibre de courant sur les lignes électriques locales (41, 42) pour déclencher un disjoncteur différentiel au niveau de l'interface centrale (20) ;
un contrôleur (3) configuré pour surveiller un statut (S) du système électrique local (30), et en réponse à la détection d'un état de défaut dans le statut surveillé (S) du système électrique local (30), activant le circuit de fuite (4) pour séparer le système électrique local (30) du réseau électrique (50) ; **caractérisé par** :
un interrupteur d'interface locale (11) configuré pour déconnecter sélectivement le système électrique local (30) des lignes électriques locales (41, 42), dans lequel en réponse à la détection de l'état de panne dans le statut surveillé (S) du système électrique local (30),
comme moyen de protection principal, le contrôleur (3) envoie initialement un signal de commande à l'interrupteur d'interface locale (11) qui fait que l'interface locale (10) sépare le système électrique local (30) du réseau électrique (50) ;
comme moyen de protection secondaire, le contrôleur (3), à la suite et uniquement en réponse à la détermination que l'interrupteur d'interface locale (11) n'est pas apte à déconnecter l'énergie électrique, active le circuit de fuite (4) pour produire le déséquilibre de courant sur les lignes électriques locales (41, 42) qui fait que l'interface centrale (20) sépare le système électrique local (30) du réseau électrique (50).

11. Interface locale (10) selon l'une quelconque des revendications précédentes, dans laquelle le circuit de fuite (4) est configuré pour produire un courant résiduel d'au moins 6 mA en courant continu et/ou d'au moins 30 mA en courant alternatif

12. Interface locale (10) selon l'une quelconque des revendications précédentes, dans laquelle l'interface locale (10) comprend une borne de terre de protection (9) pour fournir une mise à la terre, dans laquelle le circuit de fuite (4) comprend une connexion électrique commutable entre au moins l'une des lignes électriques locales (41, 42) et la borne de terre de protection (9), dans laquelle la connexion électrique commutable peut être commutée entre une première position, dans laquelle une connexion électrique entre ladite au moins l'une des lignes électriques locales (41, 42) et la borne de terre de protection (9) est interrompue, et une deuxième position, dans laquelle la connexion électrique est fermée, et dans laquelle le contrôleur (3) est agencé pour commander la connexion commutable entre les première et deuxième positions.

13. Interface locale (10) selon la revendication précédente, dans laquelle la connexion commutable comprend un ou plusieurs éléments de commutation actifs (4a, 4b, 4c, 4d) choisis dans le groupe comprenant :
un circuit de commutation de courant unipolaire pour produire un courant résiduel continu ;
un circuit de commutation de courant bipolaire pour produire un courant résiduel alternatif ;
un circuit de commutation à semiconducteur pour produire des courants résiduels alternatif et continu ; et
un circuit de commutation de relais pour produire des courants résiduels alternatif et continu en cas d'isolation électrique élevée et d'activation occasionnelle du circuit de fuite.

14. Système (100) comprenant l'interface locale (10) selon la revendication 10 reliée à l'interface centrale (20) via les lignes électriques locales (41, 42), dans lequel l'interface centrale (20) est connectée électriquement pour transférer de l'énergie électrique (E) vers et/ou depuis le réseau électrique (50) par l'intermédiaire d'un interrupteur d'interface centrale (21), dans lequel l'interrupteur d'interface centrale (21) comprend le disjoncteur différentiel pour couper la connexion électrique vers le réseau électrique (50) quand un déséquilibre se produit dans le courant électrique (I) qui est envoyé dans un sens puis dans l'autre sur les lignes électriques locales (41, 42).
